(19) Europäisches Patentamt
European Patent Office
Office européen des brevets

(11) **EP 2 996 063 B1**

(12) **EUROPEAN PATENT SPECIFICATION**

(45) Date of publication and mention
of the grant of the patent:
**23.05.2018 Bulletin 2018/21**

(51) Int Cl.:
**G06F 21/62** *(2013.01)*     **G06K 9/00** *(2006.01)*
**G07C 9/00** *(2006.01)*

(21) Application number: **15183739.0**

(22) Date of filing: **03.09.2015**

(54) **DISTRIBUTED IDENTITY VALIDATION METHOD, SYSTEM AND COMPUTER PROGRAM**

VERFAHREN, SYSTEM UND COMPUTERPROGRAMM ZUR VERTEILTEN IDENTITÄTSVALIDIERUNG

PROCÉDÉ DE VALIDATION D'IDENTITÉ DISTRIBUÉ, SYSTÈME ET PROGRAMME INFORMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.09.2014 GB 201415938**

(43) Date of publication of application:
**16.03.2016 Bulletin 2016/11**

(73) Proprietor: **IDscan Biometrics Limited**
**London E14 9QD (GB)**

(72) Inventors:
• **THOMPSON, Tamlyn**
  **London, E14 9QD (GB)**
• **ZEIDAN, Zaher**
  **London, E14 9QD (GB)**

(74) Representative: **Armstrong, Rosemary**
**Armstrong IPR Limited**
**Innovation Centre**
**NI Science Park**
**Queens Road**
**Belfast, BT3 9DT (GB)**

(56) References cited:
**WO-A1-2007/098529     US-A1- 2011 038 512**
**US-B1- 6 394 356**

**Description**

<u>Field of the Invention</u>

The present invention relates to a distributed identity validation method; and more particularly, a secure peer to peer distributed identity validation method.

<u>Background to the Invention</u>

Identity document (ID) scanning technology is increasingly used to control access to venues, resources, services, etc. However, the same technology can be used, to help commercial entities satisfy legal obligations specific to their industry. For example, licenced premises are considered in law to be private premises. To enable businesses operating from such licensed premises to invite members of the public onto the premises and serve them alcohol, these businesses are strictly governed by the 2003 Licensing Act (http://www.legislation.gov.uk/ukpga/2003/17/contents). The 2003 Licensing Act covers four main principles, one of which is the protection of children. More specifically, the 2003 Licensing Act requires licence holders and their staff to ensure that they do not serve alcohol to anyone under the age of 18 years. In addition, licence holders and their staff are required to prevent crime and disorder, prevent public nuisance and ensure the safety of those using their premises.

ID scanning technology is increasingly used to achieve the above legal requirements, and to curb anti-social behaviour and violence in licensed premises. However, a problem remains with individuals who have been denied entry to a particular venue migrating onto other venues, gaining entry thereto and creating difficulties within those venues. To prevent troublemakers migrating from one venue to another, nightclubs and pubs etc are forming networks whose members share information regarding persons banned from entry to individual establishments. This enables a network-wide ban of the individual to be effected. However, in view of the sensitivity of the shared information, the security of this data is of particular concern, to protect the privacy of the relevant persons and prevent theft or tampering with data relating to the personal details of these persons. The UK Data Protection Act 1998 ("DPA") requires data controllers to take "appropriate technical and organisational measures" to keep personal data safe and secure. Encryption technologies fall within "the state of technological development" and should be deployed in appropriate situations. While encryption of data communicated between licensed establishments may provide a degree of security thereto, nonetheless, a database of information about relevant offenders is particularly vulnerable to a central point of attack hack. In particular, anyone gaining unauthorised access to such a database would gain access to all of the sensitive personal data of the persons contained in the database.

<u>Summary of the Invention</u>

According to the invention there is provided a distributed identity validation method implemented by a plurality of coupled distributed identity validation apparatus, wherein the distributed identity validation method comprises the steps of

configuring in each distributed identity validation apparatus one or more string rules for the selection and concatenation of characters to generate ID strings; and a threshold value for assessing the match therebetween;
scanning a first identity document received by a first distributed identity validation apparatus to generate a first ID image comprising a plurality of printed characters and an image of the face of the holder of the first identity document;
extracting the image of the face from the first ID image to generate a first face image;
converting the printed characters in the first ID image into a plurality of computer-readable textual characters
using the or each string rule in the first distributed identity validation apparatus to select some of the computer-readable textual characters and concatenate at least some of them to form one or more first ID strings;
associating the or each first ID strings with the first face image to form a first user record;
storing the first user record and distributing a copy thereof to the other distributed identity validation apparatus;
receiving from another distributed identity validation apparatus a second user record and storing it;
scanning a second identity document received by the first distributed identity validation apparatus to generate a second ID image comprising a plurality of printed characters and an image of the face of the holder of the second identity document;
extracting the image of the face from the second ID image to generate a second face image;
converting the printed characters in the second ID image into a plurality of computer-readable textual characters;
using the or each string rule in the first distributed identity validation apparatus to select some of the computer-readable textual characters and concatenate at least some of them to form one or more second ID strings;
comparing the or each second ID string with the or each ID string in the or each stored user record to determine the degree to which they match;

displaying to an operator the image of the face from the second ID image together with the image of the face from the stored user record whose ID string or strings most closely match the or each second ID string;

advising that no match has been found between the holder of the second identity document and the or each stored user record in the event the degree of matching between the or each second ID string and the or each ID string in the or each stored user record is less than the threshold value.

Preferably, the steps of:

(a) using the or each string rule in the first distributed identity validation apparatus to select some of the computer-readable textual characters and concatenate at least some of them to form one or more first ID strings;

(b) using the or each string rule in the first distributed identity validation apparatus to select some of the computer-readable textual characters and concatenate at least some of them to form one or more second ID strings;

comprises the step of generating one or more checksum digits and inserting them at predefined positions in the first and second ID strings.

Preferably, the step of displaying to an operator the image of the face from the second ID image together with the image of the face from the stored user record whose ID string or strings most closely match the or each second ID string comprises a further step of prompting the operator to decide whether to allow the holder of the second identity document entry to a selected premises.

Desirably, the step of comparing the or each second ID string with the or each ID string in the or each stored user record to determine the degree to which they match, is repeated until

(a) a stored user record is found whose ID string or strings match the or each second ID string to a degree which exceeds the threshold; or

(b) the ID string or strings from all of the stored user records have been compared with the or each second ID string.

Desirably, the step of storing the first user record and distributing a copy thereof to the other distributed identity validation apparatus comprises the steps of

appending to the or each ID string in the user record an indicator of a lifetime of the relevant ID string;

distributing different subsets of the or each ID string in the user record to at least some of the other distributed identity validation apparatus;

storing the or each received ID string in a distributed identity validation apparatus for a residency duration substantially equal to the lifetime of the or each ID string; and

communicating the or each ID string to another distributed identity validation apparatus on expiry of the residency duration.

Preferably, after a predetermined period of time the distributed identity validation method comprises the further steps of

appending a "delete" instruction to a user record to generate a delete message packet;

distributing a copy of the delete message packet to the rest of the distributed identity validation apparatus; and

deleting the locally stored copy of the user record.

Preferably, the distributed identity validation method comprises the further step of deleting a stored user record on receipt of a delete message packet substantially matching the stored user record.

Desirably, the steps of extracting the image of the face from the first ID image to generate a first face image; and extracting the image of the face from the second ID image to generate a second face image, comprise the steps of using a face detection algorithm selected from the set comprising hierarchical knowledge-based methods, rule-based localization methods, feature based methods, template matching, eigenfaces, artificial neural networks and support vector machines.

Desirably, the step of generating one or more checksum digits and inserting them at predefined positions in the first and second ID strings comprises the step of using a checksum algorithm selected from the set comprising the Luhn algorithm, the Verhoeff algorithm and the Damm algorithm.

According to a second aspect of the invention there is provided a distributed identity validation apparatus comprising means adapted to perform the distributed identity validation method of the first aspect.

Preferably, the distributed identity validation apparatus comprises a digital camera or a document scanner adapted to scan identity documents received by the distributed identity validation apparatus.

Preferably, the distributed identity validation apparatus may comprise a mobile telephony device comprising a digital camera adapted to scan identity documents received by the distributed identity validation apparatus.

According to a third aspect of the invention there is provided a distributed identity validation computer program, tangibly embodied on a computer readable medium, the computer program product including instructions for causing a computer to execute the distributed identity validation method of the first aspect.

The preferred embodiment provides a secure mechanism of sharing limited amounts of (potentially sensitive) data between independent premises, insofar as the information transmitted to nodes in the relevant peer to peer network provides very limited facility for specifically identifying the person to whom the information relates. Accordingly, it is unlikely that the recipients of this data would incur specific obligations in relation to the handling of this data under Data Protection legislation.

Furthermore, while the dominant element of the transmitted information in the user record is the facial photographs, the facial photographs are not accompanied with information permitting identification of the person in the photograph. Indeed, the only other information specifically included within the user record, is one or more identity strings generated through a series of heuristics from a selected subset of the available information pertaining to the relevant person. Thus, even if unauthorised access was gained to the user records in a local user records database, it would be extremely difficult (if indeed it was possible) to regenerate all of the relevant personal information relating to the subject of the user record (and extracted from the primary ID document).

By comparing user records on the basis of textual strings, the preferred embodiment provides a much faster mechanism for checking whether a new arrival is registered with the system than face recognition algorithms for comparing faces in relevant user records. This is particularly useful in very busy and fast moving premises where it is necessary to process new arrivals as quickly as possible.

By prompting an operator to view the displayed face images and determine whether to allow the new arrival entry to the premises, the preferred embodiment supports the marriage of automated and human pattern recognition facilities to compare persons faces, thereby benefitting from the advantages of both.

Description of the Invention

Two embodiments of the distributed identity validation method are herein described, by way of example of only, with reference to the accompanying figures in which:

Figure 1 is a block diagram of the distributed identity validation systems of the second aspect;
Figure 2 is a schematic of an identity document under consideration by the distributed identity validation method shown in Figure 1; and
Figure 3 is a flow chart of distributed identity validation method of the first aspect.

For the sake of clarity, the term "identity document" will be used henceforth to mean documentation provided by a user to support their claim to a specified identity. The "identity document" will also be understood to comprise a pictorial representation (i.e. a photo or a digital image) of the face of the user, to support facial recognition of the user. For the sake of clarity, the term "face" will be used henceforth to refer to a human face. Similarly, the term "personal detail element" will be used henceforth to refer to a piece of information such as date of birth, first name, last name, first line of address, which when combined with other personal detail elements could be used to identify or prove the identity of a person.

Embodiment 1: Distributed Identity Validation System

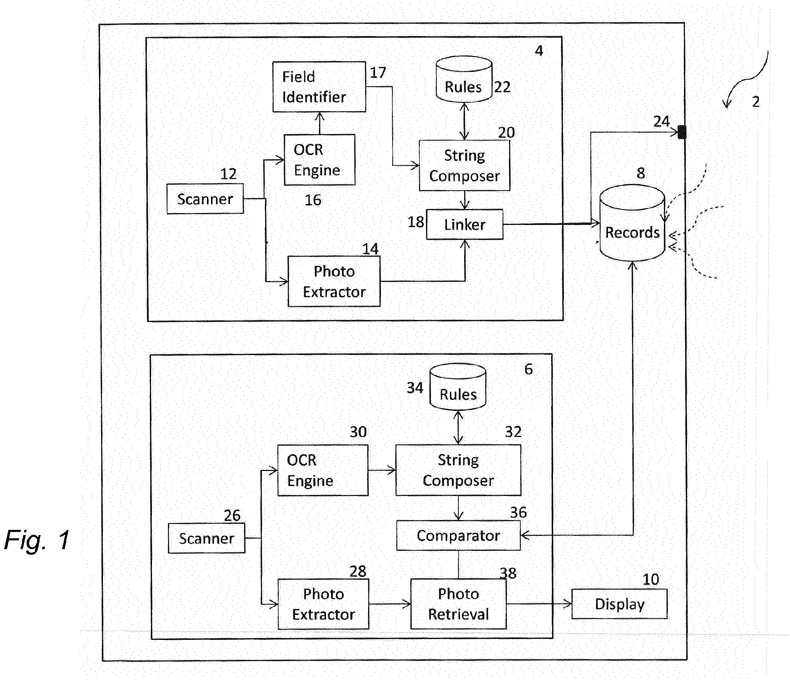

Referring to Figure 1, while certain specific features are illustrated, those skilled in the art will appreciate from the present disclosure that various other features have not been illustrated for the sake of brevity and so as not to obscure more pertinent aspects of the implementations disclosed herein. A distributed identity validation apparatus 2 may comprise an enrolment module 4, a testing module 6, a secure user records database 8 and a display 10. The enrolment module 4, testing module 6, secure user records database 8 and display 10 may be implemented in a single monolithic computer system, as well as through various other combinations of computer systems or similar devices connected in various ways.

The enrolment module 4 may comprise a scanner 12 adapted to scan a received primary identity document (not shown). Alternatively, the enrolment module 4 may comprise a digital camera (not shown) adapted to capture an image of the received primary identity document (not shown). The scanner 12 (or digital camera) may be communicably coupled with a photo extractor module 14 and an Optical character recognition (OCR) engine 16. More specifically, the scanner 12 (or digital camera) may be adapted to transmit a digital representation of the received primary identity document (not shown) to the photo extractor module 14 and the OCR engine 16. For brevity, the digital representation of the received primary identity document will be referred to henceforth as the "Enrollee ID Image".

The photo extractor module 14 may be adapted to receive the Enrollee ID Image from the scanner 12 and may comprise a face detection algorithm further adapted to detect the presence of a face (i.e. from the pictorial representation of the ID holder's face) in the Enrollee ID Image. Suitable face-detection algorithms include hierarchical knowledge-based methods for detecting faces (G. Yang and T.S. Huang, Pattern Recognition 27(1) 1994, 53-63), rule-based localization methods (C. Kotropoulos and I. Pitas, Proc. Int'l Conf. Acoustics, Speech and Signal Processing, 4, 1997, 2537-2530), feature based methods (K.C. Yow and R. Cipolla, Image and Vision Computing 15(9), 1997, 713-735), template matching (T. Sakai, M. Nagaro and S., Pattern Recognition, 1, 1969. 233-248), eigenfaces (M. Kirby and L. Sirovich, IEEE Trans. Pattern Analysis and Machine Intelligence, 12 (1), 1990, 103-108), neural networks (S.-H. Lin, S.-Y. Kung, and L.-J. Lin, IEEE Trans. Neural Networks, 8(1), 1997, 114-132) and support vector machines (E. Osuna, R. Freund, and F. Girosi, Proc. IEEE Conf. Computer Vision and Pattern Recognition, pp. 130-136, 1997) etc. The skilled person will understand that the above algorithms are mentioned for illustration purposes only and that the preferred embodiment should in no way be construed as being limited to the above algorithms. On the contrary, the preferred embodiment is adaptable to work with any facial detection algorithm as required. The photo extractor module 14 may further be adapted on detection of a face in the Enrollee ID Image to crop the image of the face from the Enrollee ID Image. For the sake of brevity, the cropped image of the face from the Enrollee ID Image will be referred to henceforth as the "Enrollee Face Image".

The OCR engine 16 may adapted to receive the Enrollee ID Image from the scanner 12 and may comprise an OCR software tool adapted to recognize a plurality of printed characters appearing in the Enrollee ID Image and convert the printed characters to a plurality of computer-readable textual characters. The OCR engine 16 may employ any suitable OCR software tool including, without limitation, Tesseract (trade mark), Screenworm (trade mark), LEADTOOLS (trade mark), SimpleOCR (trade mark) etc. The skilled person will understand that the above OCR software tools are mentioned for illustration purposes only and that the preferred embodiment should in no way be construed as being limited to the above OCR software tools. On the contrary, the preferred embodiment is adaptable to work with any OCR software tool as required.

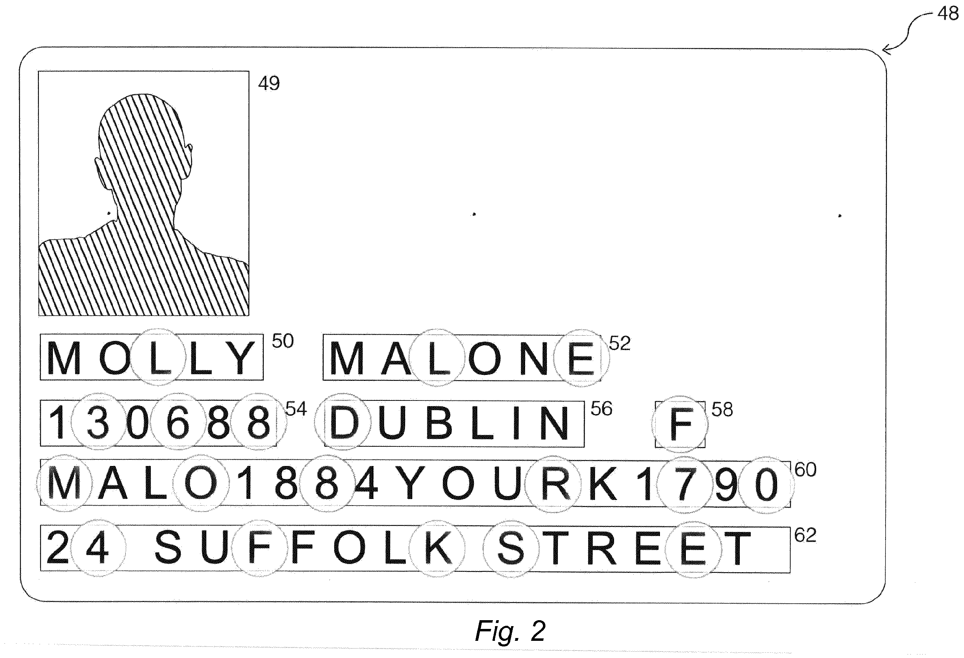

For the sake of brevity, the plurality of computer-readable textual characters obtained from the Enrollee ID Image will be referred to henceforth as the "Enrollee ID Text". The textual information contained in the primary identity document (not shown) is arranged in fields relating to specific personal detail elements. Referring to Figure 2, take for example, a potential identity card for the character "Molly Malone". The identity card 48 would comprise a photograph 49 of Molly's face. The identity card 48 would probably also comprise the holder's first name 50, second name 52, middle names (not shown), date of birth 54, place of birth 56, gender 58, ID document code 60 and address 62 etc. etc. The plurality of computer-readable textual characters in the Enrollee ID Text obtained from the primary identity document, relate to corresponding arrangements of personal detail elements from the primary identity document. Thus, using the example in Figure 2, the Enrollee ID Text would comprise "MOLLY MALONE 130688 DUBLIN F MALO1884YORK1790 24 SUFFOLK STREET".

Generalising from the above example, let us assume the Enrollee ID Text comprises p computer-readable textual characters ($\underline{EID} = \{c_1, c_2 ..... c_p\}^T$; $\underline{EID} \in \mathbb{R}^p$ ). Furthermore, let us assume that the primary identity document comprised q fields relating to specific personal detail elements. Then, the p computer-readable textual characters in the Enrollee ID Text also reflect the same q fields. In other words, the Enrollee ID Text comprises q fields ($\underline{f_i}$) each of which comprises at least one character $c_i$ and wherein the q fields collectively contain the p computer-readable textual characters ($\underline{EID} = \{\underline{f_1}, \underline{f_2} ..... \underline{f_q}\}^T (q < p)$) and $\underline{f_j} = \{c_x, ..... c_{x+n}\}^T$ $0 \le n < p$.

Returning to Figure 1, the OCR engine 16 is communicably coupled with a field identifier 17 to transmit the Enrollee ID Text thereto. The field identifier 17 is adapted to receive the Enrollee ID Text and to implement algorithms (not shown) to recognize the start and end of relevant fields in the Enrollee ID Text and to group consecutive computer-readable textual characters in the Enrollee ID Text into their appropriate field types. For brevity, the identified fields in the Enrollee ID Text will be known henceforth as the Enrollee ID Fields. The field identifier 17 is also adapted to provide the computer-readable textual characters in each Enrollee ID Field with an identifier to permit subsequent identification of the relevant Enrollee ID Field.

The photo extractor module 14 may be communicably coupled with a linker module 18 to transmit the Enrollee Face Image thereto. Similarly, the field identifier 17 may be communicably coupled with a string composer 20 to transmit the Enrollee ID Fields thereto. The string composer 20 may in turn be communicably coupled with a string rules database 22 and the linker module 18. The string composer 20 may be adapted to receive the Enrollee ID Text from the OCR engine 16 and to access the string rules database 22 to retrieve therefrom one or more string rules. The string rules comprise a plurality of instructions for the selection of specified individual characters within specified Enrollee ID fields. Let us assume the string rules database 22 comprises t string rules ($\boldsymbol{R} = [\underline{R_1}, \underline{R_2} ... \underline{R_t}]^T$), wherein each string rule $\underline{R_i}$

comprises q selection units ($\underline{U}_j$ j = 1 to q) corresponding with the q Enrollee ID Fields ($\underline{R}_i = [\underline{U}_1, \underline{U}_2 .... \underline{U}_q]^T$) in the Enrollee ID Text (i.e. so that $\boldsymbol{R} \in \mathbb{R}^{txq}$ ). Each selection unit ($\underline{U}_j$ j = 1 to q) corresponds with a particular personal detail element (e.g. first name, second name, date of birth etc.). To this end, the selection units ($\underline{U}_j$ j = 1 to q) may employ the identifiers associated with each Enrollee ID field, to identify their corresponding Enrollee ID fields. Let $s(\underline{U}_j)$ designate the number of character elements to be selected from a given Enrollee ID field by a given selection unit ($\underline{U}_j$ j = 1 to q). Personal detail elements differ in the number of characters they contain. For example, the Enrollee ID Field relating to gender probably only contains one character ("M" or "F"), whereas the Enrollee ID Field relating to address may contain several characters. Thus, the number of characters to be selected by a string rule, may differ from one Enrollee ID Field to another $s(\underline{U}_j) \neq s(\underline{U}_{j+1})$. For simplicity, the characters selected by a string rule will be referred to henceforth as "Enrollee ID Characters"

Referring to Figure 1 together with Figure 2, each selection unit $\underline{U}_j$ contains the indices of the Enrollee ID Characters to be selected from the corresponding Enrollee ID Field ($\underline{U}_j = \{Ind_1, Ind_2 ..... Ind_{s(U_j)}\}^T$). Using the example of the identity card depicted in Figure 2, the string rules in the string rules database 22 comprise seven selection units, corresponding respectively to the first name, second name, date of birth, place of birth, gender, ID document code, and address fields of the relevant identity card. Let the selection units in the first string rule ($R_1$) specify the selection of the following Enrollee ID Characters:

$R_1(U_1) = \{3\}$      third letter of the first name 50 (= "L");
$R_1(U_2) = \{3,6\}$:      third and sixth letter of second name 52 (= "L" and"E");
$R_1(U_3) = \{2,4,6\}$:      second, fourth and sixth numbers from the date of birth 54 (= "3", "6" and "8");
$R_1(U_4) = \{1\}$:      first letter of the place of birth 56 (= "D");
$R_1(U_5) = \{1\}$:      the first letter in the gender 58 (="F");
$R_1(U_6) = \{1,4,7,11,14,16\}$:
     the first, fourth, seventh, eleventh, fourteenth and sixteenth characters from the ID document code 60 (= "M", "O", "8", "R", "7", "0"); and
$R_1(U_7) = \{2,5,9,10,14\}$:
     the second, fifth, ninth, tenth and fourteenth character from the address 62.

Following from this example, the selection units in the second string rule in the string rules database 22 may be as follows:

$$R_2(U_1) = \{1\}; R_2(U_2) = \{4,6\}; R_2(U_3) = \{3,5\}; R_2(S_4) = \{2,4\}; R_2(U_5) = \{1\};$$

$$R_2(U_6) = \{1,5,9,11,15\}; R_2(U_7) = \{3,5,7,9,13\}$$

Similarly, the selection units in the third string rule in the string rules database 22 may be as follows:

$$R_2(U_1) = \{2,4\}; R_2(U_2) = \{3,7\}; R_2(U_3) = \{2,6\}; R_2(U_4) = \{5\}; R_2(U_5) = \{1\};$$

$$R_2(U_6) = \{1,2,5,9\}; R_2(U_7) = \{2,5,8,11,13\}$$

The skilled person will understand that the above example is provided for illustration purposes only and should in no way be construed as limiting the scope of the preferred embodiment. In particular, the preferred embodiment is operable with any number of string rules comprising any number of selection units to select any number of Enrollee ID Characters from the relevant Enrollee ID fields. Similarly, the selection units may use any other appropriate representations/mechanisms for selecting Enrollee ID Characters from corresponding Enrollee ID fields.

The string rules also comprise instructions for the assembly, ordering and concatenation of the Enrollee ID Characters to form a plurality of strings of the Enrollee ID Characters. For brevity, the resulting strings of the Enrollee ID Characters will be referred to henceforth as "Enrollee ID Strings" ($\underline{EIDStr} \in \mathbb{R}^{tx\left(\sum_{\substack{j=1 \\ l=1}}^{q,t} s(U_{j,l})+\alpha\right)}$, $\alpha$ = number of

checksum digits inserted into a given Enrollee ID string). The string composer 20 may intersperse Enrollee ID Characters with checksum digits at prescribed positions within the Enrollee ID Strings, wherein the checksum digits are calculated from the preceding Enrollee ID Characters (in accordance with a prescribed algorithm [e.g. the Luhn algorithm, the Verhoeff algorithm and the Damm algorithm]) in the ID string and provide a mechanism for subsequently detecting errors in the Enrollee ID Strings. The string composer 20 may further be adapted to transmit the resulting Enrollee ID Strings to the linker module 18. The skilled person will understand that the above-mentioned checksum algorithms are provided for illustration purposes only and should in no way be construed as limiting the scope of the preferred embodiment to these specific algorithms. On the contrary, the preferred embodiment is operable with any algorithm for calculating a checksum as appropriate.

The linker module 18 may be adapted to receive the Enrollee ID Strings from the string composer 20 and the Enrollee Face Image from the photo extractor module 14. The linker module 18 may be adapted to link the Enrollee ID Strings with the Enrollee Face Image to form a user record. The linker module 18 may be communicably coupled with the user records database 8 and a transmitter module 24 to transmit the user record thereto. The secure user records database 8 may be adapted to receive the user record from the linker module 18 and to store the user record therein. The secure user records database 8 may be adapted to store the user records therein in encrypted form. The transmitter module 24 may be adapted to receive the user record from the linker module 18 and to transmit the user record to the user records databases 8 in other distributed identity validation apparatus 2. The distributed identity validation apparatus 2 may be coupled with other distributed identity validation apparatus 2 by way of one or more network and other communications interfaces and through any combination of wired and wireless local area network (LAN) and/or wide area network (WAN), such as an intranet, an extranet, including a portion of the internet. Communications between the distributed identity validation apparatus 2 and the other distributed identity validation apparatus 2 may be encrypted or otherwise secured from unauthorised interception. In particular, the user records (and associated "delete" instructions - to be described below) may be encrypted in accordance with the encryption algorithm described in UK Patent Application No. GB1414929.8, included in its entirety herein by reference.

The testing module 6 may comprise a scanner 26 adapted to scan a received secondary identity document (not shown). Alternatively, the testing module 6 may comprise a digital camera (not shown) adapted to capture an image of the received secondary identity document (not shown). The scanner 26 (or digital camera) may be communicably coupled with a photo extractor module 28 and an Optical Character Recognition (OCR) engine 30. More specifically, the scanner 26 (or digital camera) may be adapted to transmit a digital representation of the received secondary identity document (not shown) to the photo extractor module 28 and the OCR engine 30. For brevity, the digital representation of the received secondary identity document will be referred to henceforth as the "Test ID Image".

The photo extractor module 28 may be adapted to receive the Test ID Image from the scanner 26 and may comprise a face detection algorithm further adapted to detect the presence of a face (i.e. from the pictorial representation of the ID holder's face) in the Test ID Image. The photo extractor may employ any suitable face detection algorithm, including without limitation, any of the algorithms mentioned above in connection with the photo extractor module 14 in the enrolment module 4. The photo extractor module 28 may further be adapted on detection of a face in the Test ID Image to crop the image of the face from the Test ID Image. For the sake of brevity, the cropped image of the face from the Test ID Image will be referred to henceforth as the "Test Face Image".

The OCR engine 30 may adapted to receive the Test ID Image from the scanner 26 and may comprise an OCR software tool adapted to recognize a plurality of printed characters appearing in the Test ID Image and convert the printed characters to a plurality of computer-readable textual characters. The OCR engine 30 may employ any suitable OCR software tool including, without limitation, the software tools mentioned above in connection with the OCR engine 16 in the enrolment module 4. For the sake of brevity, the plurality of computer-readable textual characters obtained from the Test ID image will be referred to henceforth as the "Test ID Text".

The textual information contained in the secondary identity document (not shown) is arranged in fields relating to specific personal detail elements. The plurality of computer-readable textual characters in the Test ID Text relate to corresponding arrangements of personal detail elements from the secondary identity document. Let us assume that the Test ID Text comprises v computer-readable textual characters ($\underline{TID} = \{tc_1, tc_2 ..... tc_v\}^T$; $\underline{TID} \in \mathbb{R}^v$ ). Furthermore, let us assume that the secondary identity document comprised w fields relating to specific personal detail elements. Then, the v computer-readable textual characters in the Test ID Text also reflect the same w fields. In other words, the Test ID Text comprises w fields ($\underline{tf_i}$) each of which comprises at least one character $tc_i$ and wherein the w fields collectively contain the v computer-readable textual characters ($\underline{TID} = \{tf_1, tf_2 ..... tf_w\}^T$ (w < v)) and $\underline{tf_i} = \{tc_x, .....tc_{x+n}\}^T$ $0 \le n < v$.

The OCR engine 30 may be communicably coupled with a test string composer 32 to transmit the Test ID Text thereto. The test string composer 32 may in turn be communicably coupled with a test string rules database 34 and a comparator module 36. The test string composer 32 may be adapted to receive the Test ID Text from the OCR engine 30 and to access the test string rules database 34 to retrieve therefrom one or more test string rules ($\boldsymbol{TR} = [\underline{TR_1}, \underline{TR_2} ....$

$\underline{TR_t}]^T$). The test string rules comprise a plurality of instructions for the selection of specified individual characters from the Test ID Text. The test string rules ($\boldsymbol{TR}$ = [$\underline{TR_1}$, $\underline{TR_2}$ .... $\underline{TR_t}]^T$) substantially mirror the string rules ($\boldsymbol{R}$ = [$\underline{R_1}$, $\underline{R_2}$ .... $\underline{R_t}]^T$) contained in the string rules database 22 in the enrolment module 4. For simplicity, the characters selected by the test string rules will be referred to henceforth as "Test ID Characters". Similarly, the strings resulting from the concatenation of the Test ID Characters will be referred to henceforth as "Test ID Strings". Similarly, the test string composer 32 employs a checksum algorithm which substantially mirrors the algorithm employed by the string composer 20 (in the enrolment module 4) to insert checksum digits at specified points in the Test ID Strings. Accordingly, the test string composer 32 may be adapted to effectively perform the same operations on the secondary identity document (not shown) as were applied in the enrolment module 4 to the primary identity document (not shown), to produce the Test ID Strings (($\underline{TIDStr}$

$$\in \mathbb{R}^{tx\left(\sum_{\substack{j=1 \\ l=1}}^{q,t} s(U_{j,l})+\alpha\right)}).$$

The test string composer 32 may further be adapted to transmit the Test ID Strings to the comparator module 36. The comparator module 36 may be adapted to receive the Test ID Strings from the test string composer 32. The comparator module 36 may further be communicably coupled with the user records database 8 and with a photo retrieval module 38. The user records database 8 may be adapted to receive and store user records issued by the enrolment modules 4 of other distributed identity validation apparatus 2. The comparator module 36 may be adapted to access the user records database 8 to retrieve user records therefrom. The comparator module 36 may be adapted to compare the or each Test ID String (from the secondary ID document) with the or each Enrollee ID string in each user record. The degree of matching between the or each Test ID Strings and the or each Enrollee ID string is denoted by a match score (ms). The degree of matching may be assessed by a variety of mechanisms including simple Euclidean distance between the Test strings and the Enrollee ID strings, or weighted distancing (according to, for example, the number of possibilities a given field excludes [e.g. gender excludes roughly 50% of candidate identities etc.] or the number of characters in a given field, or the importance/priority accorded to a given field). The skilled person will understand that the above examples are provided for illustration purposes only and that the preferred embodiment should in no way be construed as being limited to these examples. On the contrary, the preferred embodiment is operable with any algorithm/metric for assessing the degree of matching as required.

The comparator may be configured with a predefined threshold value and in the event the match score exceeds the threshold value, the comparator module 36 may be adapted to issue a display instruction (not shown) to the photo retrieval module 38. The display instruction may comprise the Enrollee Face Image linked with the or each Enrollee ID String matching the or each Test ID String (i.e. the Enrollee Face Image from the user record comprising the or each Enrollee ID String matching the or each Test ID String). For the sake of brevity, the Enrollee Face Image linked with the or each Enrollee ID String matching the or each Test ID String will be referred to henceforth as the "Candidate Matching Face Image".

The photo retrieval module 38 may be coupled with the photoextractor module 28 and may also be adapted on receipt of a display instruction from the comparator module 36, to retrieve from the photoextractor module 28 the Test Face Image. The photo retrieval module 38 may be communicably coupled with the display 10 to cause the Candidate Matching Face Image to be displayed to a user (not shown) side by side with the Test Face Image. Optionally, the distributed identity validation apparatus 2 may comprise an admission module (not shown) which is communicably coupled with the display 10. The admission module (not shown) is adapted to issue a prompt to the user (not shown) to decide whether to allow the holder (not shown) of the received secondary dentity document entry to the relevant premises.

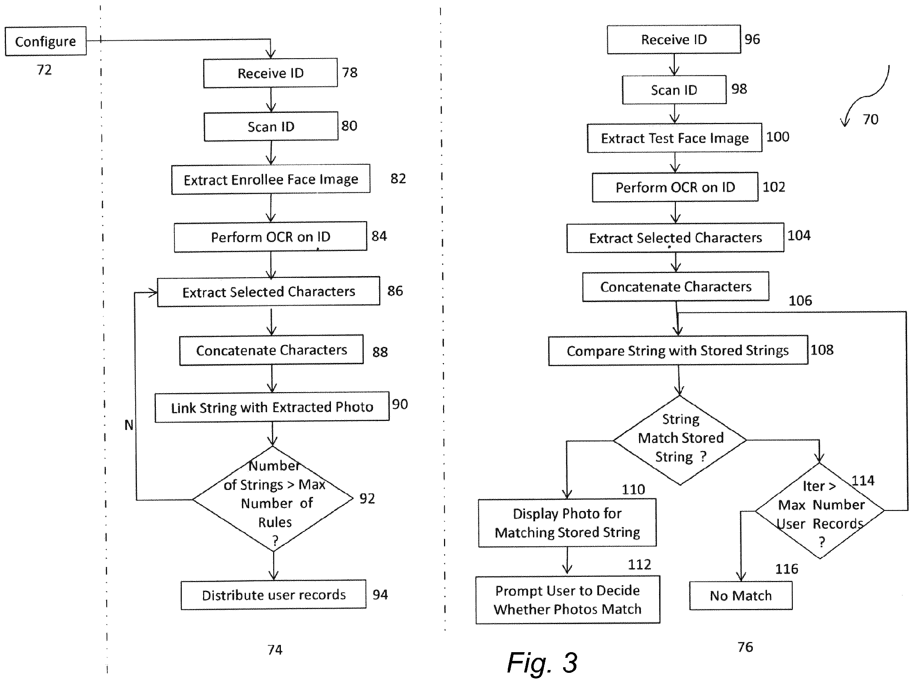

Referring to Figure 3, the distributed identity validation method 70 comprises a first configuration step 72 in which the distributed identity validation apparatus (shown in Figure1) is configured to establish

(a) the number of string rules to be implemented by the string composer and the test string composer (in the enrolment and testing modules respectively);
(b) the specific details (e.g. the number of selection units and indices of relevant ID characters in each selection unit, the checksum digit calculation algorithms and positioning in the resulting ID strings) of each string rule; and
(c) the threshold for assessing the match score designating the degree of matching between an Enrollee ID String and a Test ID String

Following the configuration step 72, the remaining operations of the distributed identity validation method 70 can be divided into an enrolment phase 74 and a testing phase 76.

The enrolment phase 74 comprises the steps of receiving 78 a primary identity document (not shown) and scanning 80 the received primary identity document (wherein the scanning may be performed by a scanner or a digital in the enrolment module (not shown) of the distributed identity validation apparatus (not shown) to generate an Enrollee ID Image. The enrolment phase 74 comprises the next steps of extracting 82 the Enrollee Face Image from the Enrollee ID Image and performing 84 OCR on the Enrollee ID Image to generate Enrollee ID Text.

Having generated the Enrollee ID text, the enrolment phase 74 comprises the next steps of:

(a) extracting 86 (in the string composer (not shown)) selected characters from the Enrollee ID Text (in accordance with the string rules in the string rules database (not shown)) to generate Enrollee ID Characters;

(b) concatenating 88 (in the string composer (not shown)) the Enrollee ID Characters (in accordance with the string rules in the string rules database (not shown)) to generate an Enrollee ID String; and

(c) linking 90 the Enrollee ID String with the Enrollee Face Image.

Steps (a) to (c) are repeated 92 for as many times as there are string rules in the string rules database 2. The collective assembly of Enrollee ID Strings linked to the Enrollee Face Image, forms a user record. As an aside, the step of concatenating 88 the Enrollee ID Characters also comprises a step of generating (not shown) checksum digits and inserting (not shown) the checksum digits into the Enrollee ID Strings in accordance with one or more checksum algorithms implemented by the string composer (not shown).

Thereafter, the enrolment phase comprises a final step of distributing 94 the user records to other distributed identity validation apparatus, to form a peer to peer network. The other distributed identity validation apparatus store the received user records in their user records database (not shown) so that each node has its own local copy of the relevant user record. Prior to distribution, the user record is provided with a marker indicating the distributed identity validation apparatus which originally created the user record. In the event the node which originally created and distributed the user record, subsequently wishes to remove the user record from the peer to peer network, the node will issue the user record together with a "delete" instruction to the other members of the peer to peer network. On receipt of a user record together with a "delete" instruction, the nodes delete the corresponding user records from their user records database (not shown).

It should be noted that the information transmitted to the nodes provides very limited facility for specifically identifying the person to whom the information relates. In particular, the dominant element of the transmitted information in the user record is the facial photo. The facial photos in the user records are not accompanied with information permitting identification of the person in the photograph. Indeed, the only other information specifically included within the user record, is one or more identity strings generated through a series of heuristics from a selected subset of the available information pertaining to the relevant person. Thus, even if unauthorised access was gained to the user records, it would be extremely difficult (if indeed it was possible) to regenerate all of the relevant personal information relating to the subject of the user record (and extracted from the primary ID document).

The testing phase 76 comprises a first step of receiving 96 a secondary identity document from a new arrival (not shown) at a premises. This is followed by the step of scanning 98 the secondary identity document (wherein the scanning may be performed by a scanner or a digital in the testing module (not shown) of the distributed identity validation apparatus (not shown) to generate a Test ID Image. The testing phase 76 comprises the next steps of extracting 100 the Test Face Image from the Test ID Image and performing 102 OCR on the Test ID Image to generate Test ID Text.

Having generated the Test ID text, the testing phase 76 comprises the next steps of:

(a) extracting 104 (in the test string composer (not shown)) selected characters from the Test ID Text (in accordance with the string rules in the test string rules database (not shown)) to generate Test ID Characters; and

(b) concatenating 106 (in the test string composer (not shown)) the Test ID Characters (in accordance with the string rules in the test string rules database (not shown) to generate a Test ID String.

The step of concatenating 106 the Test ID Characters also comprises a step of generating (not shown) checksum digits and inserting (not shown) the checksum digits into the Test ID Strings in accordance with one or more checksum algorithms implemented by the test string composer (not shown).

Thereafter, the testing phase 76 comprises the steps of comparing 108 the or each Test ID String with the or each Enrollee ID String in a user record from the user record database (not shown) to calculate a match score representing the degree of matching between the Test ID String and the or each Enrollee ID String. In the event the match score exceeds the threshold value established during the configuration step 72, the testing phase 76 comprises the steps of

(a) displaying 110 to a user (not shown) the Enrollee Face Image (from the user record) together with the Test Face Image; and

(b) prompting 112 the user (not shown) to decide whether to permit the new arrival (not shown) entry to the premises.

In the event the match score does not exceed the threshold value, the or each Test ID String is compared with the or each Enrollee ID String from another user record in the user record database (not shown) until 114 all of the user records in the user record database have been considered. In the event the match score does not exceed the threshold value for any of the user records in the user record database, the testing phase may comprise the step of issuing 116 a message to the user (not shown) that the new arrival does not match any person with a user record in the distributed identity validation apparatus (not shown).

Embodiment 2: Circulating Distributed Network of Identity Validation Apparatus

In another embodiment, each Enrollee ID string comprises at least one identifier of the string rules that were used to generate the Enrollee ID string. The resulting modified Enrollee ID strings are issued to the distributed identity validation apparatus in the peer to peer network. However, in contrast with the previous embodiment, each such distributed identity validation apparatus is not issued with the same set of modified Enrollee ID strings (i.e. in previous embodiment, all distributed identity validation apparatus are issued with the same Enrollee ID string(s) in the transmitted user record). In the present embodiment, each distributed identity validation apparatus is issued with a different subset of the total number of available modified Enrollee ID strings. The modified Enrollee ID strings are also provided with a lifetime index which indicates the duration of the period over which the Enrollee ID string will be stored in the relevant distributed identity validation apparatus. Once the said lifetime has elapsed on a given distributed identity validation apparatus, the Enrollee ID string is moved to another distributed identity validation apparatus.

As a result, the Enrollee ID strings are constantly circulating about the peer to peer network and no distributed identity validation apparatus (apart from the originating distributed identity validation apparatus) contains the entire user record. Accordingly, it is extremely difficult to hack into this embodiment as the available data is fragmented (making it much more difficult to regenerate the original personal data from the primary ID document) and constantly moving between members of the network. The circulation of the Enrollee ID strings through the peer to peer network also provides a mechanism for propagating a "delete" instruction through the network, without necessitating the broadcast of the "delete" instruction from the originating distributed identity validation apparatus to the other distributed identity validation apparatus in the peer to peer network, wherein any such broadcast may attract the attention of hackers.

On presentation of the Test ID document of a new arrival to one of the member premises, the Test ID String(s) generated from the Test ID document are compared with the Enrollee ID string(s) stored locally on the relevant distributed identity validation apparatus. In the event a match is not found, the distributed identity validation apparatus sequentially issues a request to the other members of the peer to peer network for the Enrollee ID string(s) contained therein. On receipt of a set of Enrollee ID string(s) from another distributed identity validation apparatus, any sets of Enrollee ID string(s) previously received from other distributed identity validation apparatus are deleted. Thus, at most, each node in the peer to peer network (apart from the originator of the user record) will host only two subsets of the potential Enrollee ID string(s).

**Claims**

1. A distributed identity validation method implemented by a plurality of coupled distributed identity validation apparatus, wherein the distributed identity validation method comprises the steps of configuring (72) in each distributed identity validation apparatus one or more string rules for the selection and concatenation of characters to generate ID strings; and a threshold value for assessing the match therebetween;
   scanning (80) a first identity document received by a first distributed identity validation apparatus to generate a first ID image comprising a plurality of printed characters and an image of the face of the holder of the first identity document;
   extracting (82) the image of the face from the first ID image to generate a first face image;
   converting (84) the printed characters in the first ID image into a plurality of computer-readable textual characters;
   using the or each string rule in the first distributed identity validation apparatus to select (86) some of the computer-readable textual characters and concatenate (88) at least some of them to form one or more first ID strings;
   associating (90) the or each first ID strings with the first face image to form a first user record;
   storing the first user record and distributing (94) a copy thereof to the other distributed identity validation apparatus;
   receiving (96) from another distributed identity validation apparatus a second user record and storing it;
   scanning (98) a second identity document received by the first distributed identity validation apparatus to generate a second ID image comprising a plurality of printed characters and an image of the face of the holder of the second identity document;
   extracting (100) the image of the face from the second ID image to generate a second face image; converting (102) the printed characters in the second ID image into a plurality of computer-readable textual characters;
   using the or each string rule in the first distributed identity validation apparatus to select (104) some of the computer-readable textual characters and concatenate (106) at least some of them to form one or more second ID strings;

comparing (108) the or each second ID string with the or each ID string in the or each stored user record to determine the degree to which they match;

displaying (110) to an operator the image of the face from the second ID image together with the image of the face from the stored user record whose ID string or strings most closely match the or each second ID string;

advising (116) that no match has been found between the holder of the second identity document and the or each stored user record in the event the degree of matching between the or each second ID string and the or each ID string in the or each stored user record is less than the threshold value.

2. The distributed identity validation method of Claim 1 wherein the steps of

(a) using the or each string rule in the first distributed identity validation apparatus to select (86) some of the computer-readable textual characters and concatenate (88) at least some of them to form one or more first ID strings;

(b) using the or each string rule in the first distributed identity validation apparatus to select (104) some of the computer-readable textual characters and concatenate (106) at least some of them to form one or more second ID strings;

comprises the step of generating one or more checksum digits and inserting them at predefined positions in the first and second ID strings.

3. The distributed identity validation method of Claim 1 or Claim 2 wherein the step of displaying (110) to an operator the image of the face from the second ID image together with the image of the face from the stored user record whose ID string or strings most closely match the or each second ID string comprises a further step of prompting the operator to decide whether to allow the holder of the second identity document entry to a selected premises.

4. The distributed identity validation method of any of the preceding claims wherein the step of comparing (108) the or each second ID string with the or each ID string in the or each stored user record to determine the degree to which they match, is repeated until

(a) a stored user record is found whose ID string or strings match the or each second ID string to a degree which exceeds the threshold; or

(b) the ID string or strings from all of the stored user records have been compared with the or each second ID string.

5. The distributed identity validation method of any of the preceding claims wherein the step of storing the first user record and distributing (94) a copy thereof to the other distributed identity validation apparatus comprises the steps of appending to the or each ID string in the user record an indicator of a lifetime of the relevant ID string;

distributing different subsets of the or each ID string in the user record to at least some of the other distributed identity validation apparatus;

storing the or each received ID string in a distributed identity validation apparatus for a residency duration substantially equal to the lifetime of the or each ID string; and

communicating the or each ID string to another distributed identity validation apparatus on expiry of the residency duration.

6. The distributed identity validation method of any of the preceding claims wherein after a predetermined period of time the method comprises the further steps of

appending a "delete" instruction to a user record to generate a delete message packet;

distributing a copy of the delete message packet to the rest of the distributed identity validation apparatus; and

deleting the locally stored copy of the user record.

7. The distributed identity validation method of Claim 6 wherein the method comprises the further step of deleting a stored user record on receipt of a delete message packet substantially matching the stored user record.

8. The distributed identity validation method of any of the preceding claims wherein the steps of extracting (82) the image of the face from the first ID image to generate a first face image; and extracting (100) the image of the face from the second ID image to generate a second face image, comprise the steps of using a face detection algorithm selected from the set comprising hierarchical knowledge-based methods, rule-based localization methods, feature based methods, template matching, eigenfaces, artificial neural networks and support vector machines.

9. The distributed identity validation method of Claim 2 wherein the step of generating one or more checksum digits and inserting them at predefined positions in the first and second ID strings comprises the step of using a checksum algorithm selected from the set comprising the Luhn algorithm, the Verhoeff algorithm and the Damm algorithm.

10. A distributed identity validation apparatus comprising means adapted to perform the distributed identity validation method of any of the preceding claims.

11. The distributed identity validation apparatus as claimed in Claim 10, wherein the distributed identity validation apparatus comprises a digital camera or a document scanner adapted to scan identity documents received by the distributed identity validation apparatus.

12. The distributed identity validation apparatus as claimed in Claim 10 or Claim 11 wherein the distributed identity validation apparatus may comprise a mobile telephony device comprising a digital camera adapted to scan identity documents received by the distributed identity validation apparatus.

13. A distributed identity validation computer program, tangibly embodied on a computer readable medium, the computer program product including instructions for causing a computer to execute the distributed identity validation method as claimed in any one of Claims 1 to 9.

**Patentansprüche**

1. Verteiltes Identitätsvalidierungsverfahren, implementiert mit mehreren gekoppelten verteilten Identitätsvalidierungsvorrichtungen, wobei das verteilte Identitätsvalidierungsverfahren die folgenden Schritte beinhaltet:

   Konfigurieren (72), in jeder verteilten Identitätsvalidierungsvorrichtung, von einer oder mehreren String-Regeln für die Auswahl und Verkettung von Zeichen zum Erzeugen von ID-Strings; und eines Schwellenwertes zum Beurteilen der Übereinstimmung dazwischen;
   Scannen (80) eines ersten von einer ersten verteilten Identitätsvalidierungsvorrichtung empfangenen Identitätsdokuments zum Erzeugen eines ersten ID-Bildes, das mehrere gedruckte Zeichen umfasst, und eines Bildes des Gesichts des Halters des ersten Identitätsdokuments;
   Extrahieren (82) des Bildes des Gesichts aus dem ersten ID-Bild zum Erzeugen eines ersten Gesichtsbildes;
   Umwandeln (84) der gedruckten Zeichen im ersten ID-Bild in mehrere computerlesbare Textzeichen;
   Benutzen der oder jeder String-Regel in der ersten verteilten Identitätsvalidierungsvorrichtung zum Auswählen (86) von einigen der computerlesbaren Textzeichen und zum Verketten (88) von wenigstens einigen davon zum Bilden von einem oder mehreren ersten ID-Strings;
   Assoziieren (90) des oder jedes ersten ID-Strings mit dem ersten Gesichtsbild zum Bilden eines ersten Benutzerdatensatzes;
   Speichern des ersten Benutzerdatensatzes und Verteilen (94) einer Kopie davon zu der anderen verteilten Identitätsvalidierungsvorrichtung;
   Empfangen (96), von einer anderen verteilten Identitätsvalidierungsvorrichtung, eines zweiten Benutzerdatensatzes und Speichern desselben;
   Scannen (98) eines von der ersten verteilten Identitätsvalidierungsvorrichtung empfangenen zweiten Identitätsdokuments zum Erzeugen eines zweiten ID-Bildes, das mehrere gedruckte Zeichen umfasst, und eines Bildes des Gesichts des Halters des zweiten Identitätsdokuments;
   Extrahieren (100) des Bildes des Gesichts aus dem zweiten ID-Bild zum Erzeugen eines zweiten Gesichtsbildes;
   Umwandeln (102) der gedruckten Zeichen im zweiten ID-Bild in mehrere computerlesbare Textzeichen;
   Benutzen der oder jeder String-Regel in der ersten verteilten Identitätsvalidierungsvorrichtung zum Auswählen (104) von einigen der computerlesbaren Textzeichen und Verketten (106) von wenigstens einigen davon zum Bilden von einem oder mehreren zweiten ID-Strings;
   Vergleichen (108) des oder jedes zweiten ID-Strings mit dem oder jedem ID-String in dem oder jedem gespeicherten Benutzerdatensatz zum Bestimmen des Grades ihrer Übereinstimmung;
   Anzeigen (110), einem Bediener, des Bildes des Gesichts vom zweiten ID-Bild zusammen mit dem Bild des Gesichts vom gespeicherten Benutzerdatensatz, dessen ID-String oder -Strings am engsten mit dem oder jedem zweiten ID-String übereinstimmt/-en;
   Feststellen (116), dass keine Übereinstimmung zwischen dem Halter des zweiten Identitätsdokuments und dem oder jedem gespeicherten Benutzerdatensatz gefunden wurde, falls der Grad an Übereinstimmung zwischen dem oder jedem zweiten ID-String und dem oder jedem ID-String in dem oder jedem gespeicherten Datensatz geringer ist als der Schwellenwert.

2. Verteiltes Identitätsvalidierungsverfahren nach Anspruch 1, wobei die Schritte:

(a) des Benutzens der oder jeder String-Regel in der ersten verteilten Identitätsvalidierungsvorrichtung zum Auswählen (86) von einigen der computerlesbaren Textzeichen und zum Verketten (88) von wenigstens einigen davon zum Bilden von einem oder mehreren ersten ID-Strings;
(b) des Benutzens der oder jeder String-Regel in der ersten verteilten Identitätsvalidierungsvorrichtung zum Auswählen (104) von einigen der computerlesbaren Textzeichen und zum Verketten (106) von wenigstens einigen davon zum Bilden von einem oder mehreren zweiten ID-Strings;

den Schritt des Erzeugens von einer oder mehreren Prüfsummenstellen und des Einfügens derselben an vordefinierten Positionen in die ersten und zweiten ID-Strings beinhalten.

3. Verteiltes Identitätsvalidierungsverfahren nach Anspruch 1 oder Anspruch 2, wobei der Schritt des Anzeigens (110), einem Bediener, des Bildes des Gesichts vom zweiten ID-Bild zusammen mit dem Bild des Gesichts von dem gespeicherten Benutzerdatensatz, dessen ID-String oder - Strings am besten mit dem oder jedem ID-String übereinstimmt/-en, einen weiteren Schritt des Aufforderns des Benutzers beinhaltet zu entscheiden, ob dem Halter des zweiten Identitätsdokuments Zugang zu einem gewählten Ort gestattet werden soll.

4. Verteiltes Identitätsvalidierungsverfahren nach einem der vorherigen Ansprüche, wobei der Schritt des Vergleichens (108) des oder jedes zweiten ID-Strings mit dem oder jedem ID-String in dem oder jedem gespeicherten Benutzerdatensatz zum Bestimmen des Grades ihrer Übereinstimmung wiederholt wird, bis

(a) ein gespeicherter Benutzerdatensatz gefunden wird, dessen ID-String oder -Strings mit dem oder jedem ID-String in einem Grad übereinstimmt, der die Schwelle übersteigt; oder
(b) der oder die ID-String(s) aus allen gespeicherten Benutzerdatensätzen mit dem oder jedem zweiten ID-String verglichen wurden.

5. Verteiltes Identitätsvalidierungsverfahren nach einem der vorherigen Ansprüche, wobei der Schritt des Speicherns des ersten Benutzerdatensatzes und des Verteilens (94) einer Kopie davon zu den anderen verteilten Identitätsvalidierungsvorrichtungen die folgenden Schritte beinhaltet:

Anhängen an den oder jeden ID-String in dem Benutzerdatensatz eines Indikators einer Lebensdauer des relevanten ID-Strings;
Verteilen unterschiedlicher Teilsätze des oder jedes ID-Strings in dem Benutzerdatensatz zu wenigstens einigen der anderen verteilten Identitätsvalidierungsvorrichtungen;
Speichern des oder jedes empfangenen ID-Strings in einer verteilten Identitätsvalidierungsvorrichtung für eine Residenzdauer, die im Wesentlichen gleich der Lebensdauer des oder jedes ID-Strings ist; und
Übermitteln des oder jedes ID-Strings zu einer anderen verteilten Identitätsvalidierungsvorrichtung nach Ablauf der Residenzdauer.

6. Verteiltes Identitätsvalidierungsverfahren nach einem der vorherigen Ansprüche, wobei das Verfahren nach einer vorbestimmten Zeitperiode die folgenden weiteren Schritte beinhaltet:

Anhängen eines "Lösch"-Befehls an einen Benutzerdatensatz zum Erzeugen eines Löschnachrichtenpakets;
Verteilen einer Kopie des Löschnachrichtenpakets an die übrigen verteilten Identitätsvalidierungsvorrichtungen; und
Löschen der lokal gespeicherten Kopie des Benutzerdatensatzes.

7. Verteiltes Identitätsvalidierungsverfahren nach Anspruch 6, wobei das Verfahren den weiteren Schritt des Löschens eines gespeicherten Benutzerdatensatzes nach Empfang eines Löschnachrichtenpakets beinhaltet, das mit dem gespeicherten Benutzerdatensatz im Wesentlichen übereinstimmt.

8. Verteiltes Identitätsvalidierungsverfahren nach einem der vorherigen Ansprüche, wobei die Schritte des Extrahierens (82) des Bildes des Gesichts aus dem ersten ID-Bild zum Erzeugen eines ersten Gesichtsbildes; und des Extrahierens (100) des Bildes des Gesichts aus dem zweiten ID-Bild zum Erzeugen eines zweiten Gesichtsbildes die Schritte des Benutzens eines Gesichtserkennungsalgorithmus beinhaltet, ausgewählt aus dem Satz umfassend hierarchische kenntnisgestützte Verfahren, regelgestützte Lokalisierungsverfahren, merkmalsgestützte Verfahren, Schablonenübereinstimmung, Eigengesichter, künstliche neuronale Netzwerke und Support-Vektor-Maschinen.

9. Verteiltes Identitätsvalidierungsverfahren nach Anspruch 2, wobei der Schritt des Erzeugens von einer oder mehreren Prüfsummenstellen und des Einfügens derselben an vordefinierten Positionen in die ersten und zweiten ID-Strings den Schritt des Benutzens eines Prüfsummenalgorithmus beinhaltet, ausgewählt aus dem Satz, der den Luhn-Algorithmus, den Verhoeff-Algorithmus und den Damm-Algorithmus umfasst.

10. Verteilte Identitätsvalidierungsvorrichtung, die Mittel umfasst, ausgelegt zum Ausführen des verteilten Identitätsvalidierungsverfahrens nach einem der vorherigen Ansprüche.

11. Verteilte Identitätsvalidierungsvorrichtung nach Anspruch 10, wobei die verteilte Identitätsvalidierungsvorrichtung eine digitale Kamera oder einen Dokumentenscanner umfasst, ausgelegt zum Scannen von Identitätsdokumenten, die von der verteilten Identitätsvalidierungsvorrichtung empfangen werden.

12. Verteilte Identitätsvalidierungsvorrichtung nach Anspruch 10 oder Anspruch 11, wobei die verteilte Identitätsvalidierungsvorrichtung ein mobiles Telefoniegerät umfassen kann, das eine digitale Kamera umfasst, ausgelegt zum Scannen von von der verteilten Identitätsvalidierungsvorrichtung empfangenen Identitätsdokumenten.

13. Verteiltes Identitätsvalidierungs-Computerprogramm, fassbar ausgestaltet auf einem computerlesbaren Medium, wobei das Computerprogrammprodukt Befehle enthält, um zu bewirken, dass ein Computer das verteilte Identitätsvalidierungsverfahren nach einem der Ansprüche 1 bis 9 durchführt.

## Revendications

1. Procédé de validation d'identité distribuée mis en oeuvre par une pluralité d'appareils de validation d'identité distribuée couplés, le procédé de validation d'identité distribuée comprenant les étapes de configuration (72) dans chaque appareil de validation d'identité distribuée d'une ou plusieurs règles de chaînes pour la sélection et la concaténation de caractères pour générer des chaînes d'ID ; et une valeur limite pour évaluer la concordance entre elles ;
balayage (80) d'un premier document d'identité reçu par un premier appareil de validation d'identité distribuée pour générer une première image d'ID comprenant une pluralité de caractères imprimés et une image du visage du détenteur du premier document d'identité ;
extraction (82) de l'image du visage à partir de la première image d'ID pour générer une première image de visage ;
conversion (84) des caractères imprimés dans la première image d'ID en une pluralité de caractères textuels lisibles par ordinateur ;
utilisation de la ou chaque règle de chaînes dans le premier appareil de validation d'identité distribuée pour sélectionner (86) certains des caractères textuels lisibles par ordinateur et concaténer (88) au moins certains d'entre-eux pour former une ou plusieurs premières chaînes d'ID ;
association (90) des ou de chaque premières chaînes d'ID à la première image de visage pour former un premier enregistrement d'utilisateur ;
mémorisation du premier enregistrement d'utilisateur et distribution (94) d'une copie de celui-ci aux autres appareils de validation d'identité distribuée ;
réception (96) depuis un autre appareil de validation d'identité distribuée d'un second enregistrement d'utilisateur et mémorisation de celui-ci ;
balayage (98) d'un second document d'identité reçu par le premier appareil de validation d'identité distribuée pour générer une seconde image d'ID comprenant une pluralité de caractères imprimés et une image du visage du détenteur du second document d'identité ;
extraction (100) de l'image du visage à partir de la seconde image d'ID pour générer une seconde image de visage ;
conversion (102) des caractères imprimés dans la seconde image d'ID en une pluralité de caractères textuels lisibles par ordinateur ;
utilisation de la ou chaque règle de chaînes dans le premier appareil de validation d'identité distribuée pour sélectionner (104) certains des caractères textuels lisibles par ordinateur et concaténer (106) au moins certains d'entre-eux pour former une ou plusieurs secondes chaînes d'ID ;
comparaison (108) de la ou chaque seconde chaîne d'ID à la ou chaque chaîne d'ID dans le ou chaque enregistrement d'utilisateur mémorisé pour déterminer leur degré de concordance ;
affichage (110) à un opérateur de l'image du visage issue de la seconde image d'ID ainsi que de l'image du visage issue de l'enregistrement d'utilisateur mémorisé dont la ou les chaînes d'ID concordent le plus avec la ou chaque seconde chaîne d'ID ;
annonce (116) qu'aucune concordance n'a été trouvée entre le détenteur du second document d'identité et le ou chaque enregistrement d'utilisateur mémorisé si le degré de concordance entre la ou chaque seconde chaîne d'ID et la ou chaque chaîne d'ID dans le ou chaque enregistrement d'utilisateur mémorisé est inférieur à la valeur limite.

2. Procédé de validation d'identité distribuée selon la revendication 1 dans lequel les étapes de

(a) utilisation de la ou chaque règle de chaînes dans le premier appareil de validation d'identité distribuée pour sélectionner (86) certains des caractères textuels lisibles par ordinateur et concaténer (88) au moins certains d'entre-eux pour former une ou plusieurs premières chaînes d'ID ;
(b) utilisation de la ou chaque règle de chaînes dans le premier appareil de validation d'identité distribuée pour sélectionner (104) certains des caractères textuels lisibles par ordinateur et concaténer (106) au moins certains d'entre-eux pour former une ou plusieurs secondes chaînes d'ID ;

comprennent l'étape de génération d'un ou plusieurs chiffres de total de contrôle et d'insertion de ceux-ci à des positions prédéfinies dans les premières et secondes chaînes d'ID.

3. Procédé de validation d'identité distribuée selon la revendication 1 ou la revendication 2 dans lequel l'étape d'affichage (110) à un opérateur de l'image du visage issue de la seconde image d'ID ainsi que de l'image du visage issue de l'enregistrement d'utilisateur mémorisé dont la ou les chaînes d'ID concordent le plus avec la ou chaque seconde chaîne d'ID comprend une étape supplémentaire d'invite de l'opérateur à décider d'autoriser ou non le détenteur du second document d'identité à entrer dans un local sélectionné.

4. Procédé de validation d'identité distribuée selon l'une quelconque des revendications précédentes dans lequel l'étape de comparaison (108) de la ou chaque seconde chaîne d'ID à la ou chaque chaîne d'ID dans le ou chaque enregistrement d'utilisateur mémorisé pour déterminer leur degré de concordance est répétée jusqu'à ce que

(a) un enregistrement d'utilisateur mémorisé dont la ou les chaînes d'ID correspondent à la ou chaque seconde chaîne d'ID à un degré qui dépasse la limite soit trouvé ; ou
(b) la ou les chaînes d'ID de tous les enregistrements d'utilisateur mémorisés aient été comparées à la ou chaque seconde chaîne d'ID.

5. Procédé de validation d'identité distribuée selon l'une quelconque des revendications précédentes dans lequel l'étape de mémorisation du premier enregistrement d'utilisateur et de distribution (94) d'une copie de celui-ci aux autres appareils de validation d'identité distribuée comprend les étapes de
ajout à la ou chaque chaîne d'ID dans l'enregistrement d'utilisateur d'un indicateur de durée de vie de la chaîne d'ID pertinente ;
distribution de différents sous-ensembles de la ou chaque chaîne d'ID dans l'enregistrement d'utilisateur à au moins certains des autres appareils de validation d'identité distribuée ;
mémorisation de la ou chaque chaîne d'ID reçue dans un appareil de validation d'identité distribuée pendant une durée de séjour sensiblement égale à la durée de vie de la ou chaque chaîne d'ID ; et
communication de ou chaque chaîne d'ID à un autre appareil de validation d'identité distribuée à l'expiration de la durée de séjour.

6. Procédé de validation d'identité distribuée selon l'une quelconque des revendications précédentes, le procédé comprenant en outre, après une période de temps prédéterminée, les étapes supplémentaires de
ajout d'une instruction de suppression "delete" à un enregistrement d'utilisateur pour générer un paquet de message de suppression ;
distribution d'une copie du paquet de message de suppression au reste des appareils de validation d'identité distribué ; et
suppression de la copie mémorisée localement de l'enregistrement d'utilisateur.

7. Procédé de validation d'identité distribuée selon la revendication 6, le procédé comprenant l'étape supplémentaire de suppression d'un enregistrement d'utilisateur mémorisé à la réception d'un paquet de message de suppression concordant sensiblement avec l'enregistrement d'utilisateur mémorisé.

8. Procédé de validation d'identité distribuée selon l'une quelconque des revendications précédentes dans lequel les étapes d'extraction (82) de l'image du visage à partir de la première image d'ID pour générer une première image de visage ; et d'extraction (100) de l'image du visage à partir de la seconde image d'ID pour générer une seconde image de visage, comprennent les étapes d'utilisation d'un algorithme de détection de visage sélectionné dans l'ensemble comprenant des procédés hiérarchiques basés sur la connaissance, des procédés de localisation à base de règles, des procédés à base de caractéristiques, une concordance de modèles, des faces propres, des réseaux neuronaux artificiels et des machines à vecteurs de support.

9. Procédé de validation d'identité distribuée selon la revendication 2 dans lequel l'étape de génération d'un ou plusieurs chiffres de total de contrôle et d'insertion de ceux-ci à des positions prédéfinies dans les premières et secondes chaînes d'ID comprend l'étape d'utilisation d'un algorithme de total de contrôle sélectionné dans l'ensemble comprenant l'algorithme de Luhn, l'algorithme de Verhoeff et l'algorithme d e Damm.

10. Appareil de validation d'identité distribué comprenant des moyens adaptés pour exécuter un procédé de validation d'identité distribuée selon l'une quelconque des revendications précédentes.

11. Appareil de validation d'identité distribué selon la revendication 10, l'appareil de validation d'identité distribuée comprenant une caméra numérique ou un scanner de document pour scanner des documents d'identité reçus par les appareils de validation d'identité distribuée.

12. Appareil de validation d'identité distribuée selon la revendication 10 ou la revendication 11, l'appareil de validation d'identité distribuée pouvant comprendre un dispositif de téléphonie mobile comprenant une caméra numérique adaptée pour scanner des documents d'identité reçus par les appareils de validation d'identité distribué.

13. Programme informatique de validation d'identité distribué, mis en oeuvre de manière tangible sur un support lisible par ordinateur, le produit de programme informatique comportant des instructions pour amener un ordinateur à exécuter le procédé de validation d'identité distribuée selon l'une quelconque des revendications 1 à 9.

*Fig. 1*

*Fig. 2*

EP 2 996 063 B1

Configure
72

Receive ID | 78

Scan ID | 80

Extract Enrollee Face Image | 82

Perform OCR on ID | 84

Extract Selected Characters | 86

Concatenate Characters | 88

Link String with Extracted Photo | 90

N

Number of Strings > Max Number of Rules ? | 92

Distribute user records | 94

74

Receive ID | 96

Scan ID | 98

Extract Test Face Image | 100

Perform OCR on ID | 102

Extract Selected Characters | 104

Concatenate Characters

106

Compare String with Stored Strings | 108

String Match Stored String ?

110

Display Photo for Matching Stored String

112

Prompt User to Decide Whether Photos Match

Iter > Max Number User Records ? | 114

116

No Match

70

76

*Fig. 3*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1414929 A

**Non-patent literature cited in the description**

- **G. YANG ; T.S. HUANG.** *Pattern Recognition,* 1994, vol. 27 (1), 53-63
- **C. KOTROPOULOS ; I. PITAS.** *Proc. Int'l Conf. Acoustics, Speech and Signal Processing,* 1997, vol. 4, 2537-2530
- **K.C. YOW ; R. CIPOLLA.** *Image and Vision Computing,* 1997, vol. 15 (9), 713-735
- **T. SAKAI ; M. NAGARO ; S., PATTERN.** *Recognition,* 1969, vol. 1, 233-248
- **M. KIRBY ; L. SIROVICH.** *IEEE Trans. Pattern Analysis and Machine Intelligence,* 1990, vol. 12 (1), 103-108
- **S.-H. LIN ; S.-Y. KUNG ; L.-J. LIN.** *IEEE Trans. Neural Networks,* 1997, vol. 8 (1), 114-132
- **E. OSUNA ; R. FREUND ; F. GIROSI.** *Proc. IEEE Conf. Computer Vision and Pattern Recognition,* 1997, 130-136